# EUROPEAN PATENT APPLICATION

(11) **EP 1 816 879 A1**
(43) Date of publication of application: **08.08.2007**
(21) Application number: 06425057.4
(22) Date of filing: 03.02.2006
(51) Int. Cl.: H04Q 7/30

(54) **Method for congestion control with macro diversity**

(71) Applicant: Siemens S.p.A., 20126 Milano (IT); Siemens AG Österreich, 1210 Wien (AT)
(72) Inventor: Gartner, Beate, 2542 Kottingbrunn (AT); Lunter, Pavol, 85101 Bratislava (SK); Malafronte, Gennaro Ciro, 80050 Casola di Napoli (IT)

(57) **Abstract**

In state of the art cellular telecommunication systems, congestion control is not dealt optimally in case of macro diversity since the Node B autonomously decides the actions to be taken in case of congestion or decongestion.

The present method congestion control with macro diversity comprises one ore more of the following steps performed by the serving radio network controller (SRNC):
a) controlling the variation of the transmission rate over the congested branch (I1, I2, I3) by including a regulating parameter field (RF) within the congestion indication message (CIM);
b) defining the mode for the variation of the transmission rate over a congested branch (11, 12, 13) by sending a mode parameter field (MF) to at least one of the base stations (NB1, NB2, NB3).

## Description

The present invention relates to a method according to the preamble of claims 1 and 3.

In third generation cellular telecommunications systems, macro diversity is used for improving the quality of the radio connections or for providing seamless handover capabilities.

In a macro diversity state, a user equipment or mobile station has more than one simultaneous radio links with more than one base stations or Nodes B, respectively. Consequently, the serving radio network controller (SRNC) has more than one macro diversity branches. The branches arriving to the SRNC may be either Iub or Iur interfaces, depending if the SRNC is connected directly to the Node B or if it is connected via a drift RNC.

In current state of the art systems, when the SRNC detects, at the frame protocol (FP) level, congestion over one of the Iub or Iur branches, the SRNC has the choice between two options.

According to a first option, the SRNC may just ignore the congestion over the congested branch and, accordingly, it may not send any transport network layer (TNL) congestion indication to the concerned Node B.

Unfortunately, if the SRNC pursues such an option, the congested EDCH branch may experience higher TNL delay and/or frame loss and this may result in a branch cut in the MDC module with a corresponding loss in the macro diversity gain for the SRNC. The macro diversity gain is a gain experienced by the SRNC that may be used to improve the quality of the connection with the user equipment, due to the redundant information of macro diversity.

Moreover, if the SRNC pursues the first option and does not decongest the congested MAC-d flow, the congested MAC-d flow may also reduce the stability of the TNL system, causing instability and quality of service degradation also for the other user equipments which are using the same transport resources. In fact, in third generation systems, transport resources are shared among different users and the branches connecting Nodes B and SRNCs may carry uplink transport bearers which are associated to more than one user equipments.

According to a second option, the SRNC may send a TNL Congestion Indication only to the congested Node B.

Upon reception of such congestion indication, the scheduler of the Node B applies a congestion resolution algorithm for decongesting the congested branch by reducing the uplink EDCH rate.

The SRNC is sending the TNL Congestion Indication message to the concerned Node B irrespectively of the fact that the congested Node B and radio links are serving or non-serving.

In case the concerned Node B is a serving node, in order to reduce the uplink EDCH rate for the congested MAC-d flow, without having buffer overflow in the congested Node B, the Node B should reduce the scheduling grants to the user equipment, given the close interaction between the TNL and the EDCH scheduler of the Node B.

In case the concerned Node B is a non-serving node, the non-serving Node B should reduce the uplink EDCH rate for the congested MAC-d flow without sending the reducing relative grants to the user equipment.

This second option has the advantage, over the first option, that the macro diversity gain in the MDC module is protected and that the stability of the system is preserved.

However a drawback of this second option is that the concerned Node B decides autonomously the amount of reduction to be performed on the congested branch. Such decision taken by Node B is based only on the specific information present locally within the Node B.

The above explained two options are currently used in methods that comply with up to release 6 of 3GPP standards.

When the SRNC detects no congestion over the previously congested branch, it sends a message to the Node B which indicates that there is no congestion anymore. In 3GPP standard, said message is sent in the TNL Congestion Indication message with the Congestion Status field equals to zero which means "not congested".

After being notified by the SRNC that the congestion is over, the Node B typically starts a procedure of recovery by gradually going back to normal operation. Also in 3GPP standard, a previously congested Node B recovers from congestion by increasing the transmission rate in a gradual and in an autonomous way.

Similarly to the congestion case, also in the decongestion case, the decision of the speed to be used to return to normal operation is taken by the Node B independently, based only on the specific information present locally within the concerned Node B.

Thus, as above explained, in state of the art cellular telecommunication systems, TNL congestion control for EDCH is not dealt optimally in case of macro diversity.

In fact the Node B autonomously decides, during congestion control, the mode to be used to reduce the transmission rate and the amounts of transmission rate variations, in both case of decrease and increase.

Unfortunately, the Node B lacks the information about the status of the overall resources for optimally and flexibly taking the above decisions.

It is therefore the aim of the present invention to overcome the above mentioned drawbacks, in particular by providing a method that optimizes TNL congestion control in a macro diversity state.

The afore mentioned aim is achieved by a method for congestion control with macro diversity in a telecommunication cellular system, in which a mobile station has at least two radio links connecting to at least two respective base stations; said at least two base stations being connected to a serving radio network controller via at least two respective branches; and said at least two base stations comprising one serving base station and at least one non-serving base station; said method comprising the steps of: by said serving radio network controller, identifying the congestion status level over a congested branch; by said serving radio network controller, sending a congestion indication message including a congestion status parameter to the congested base station associated with said congested branch; said method characterized in that it further comprises the step of:
a) by said serving radio network controller, controlling the variation of the transmission rate over said congested branch by including a regulating parameter field within
   said congestion indication message.

The afore mentioned aim is achieved by a method for congestion control with macro diversity in a telecommunication cellular system, in which a mobile station has at least two radio links connecting to at least two respective base stations; said at least two base stations being connected to a serving radio network controller via at least two respective branches; and said at least two base stations comprising one serving base station (NB1) and at least one non-serving base station; said method comprising the steps of:
- by said serving radio network controller, identifying the congestion status level over a congested branch;
- by said serving radio network controller, sending a congestion indication message including a congestion status parameter to the congested base station associated with said congested branch;
said method characterized in that it further comprises the step of:
b) by said serving radio network controller, defining the mode for the variation of the transmission rate over a congested branch by sending a mode parameter field to at least one of said base stations.

Conveniently the invention may further comprise:
a) by said serving radio network controller, controlling the variation of the transmission rate over said congested branch by including a regulating parameter field within said congestion indication message; or
b) by said serving radio network controller, defining the mode for the variation of the transmission rate over a congested branch by sending a mode parameter field to at least one of said base stations.

The invention may preferably comprise:
- an internal buffer within said congested base station;
- if said congested base station is a serving base station, reducing the transmission rate on said congested branch without reducing the transmission rate on the associated radio link;
- by said congested base station, controlling that the filling level of said internal buffer is within a predefined threshold; if said filling level exceeds said predefined threshold, reducing the transmission rate on said associated radio link.

The invention may preferably comprise:
- if said congested base station is a non serving base station, reducing the transmission rate on said congested branch without reducing the transmission rate on the associated radio link by dropping internal frame protocol PDUs by said congested non-serving base station.

The invention may preferably comprise:
- an internal buffer within said congested base station;
- if said congested base station is a non serving base station, reducing the transmission rate on said congested branch without reducing the transmission rate on the associated radio link by controlling that the filling level of said internal buffer is within a predefined threshold;
- if said filling level exceeds said predefined threshold, dropping frame protocol PDUs by said congested non-serving base station.

In the invention, conveniently, said regulating parameter field may be included in said congestion indication message indicates to the congested base station the rate variation to be performed on said congested branch; wherein said percentage of variation indicates:
i. the transmission rate decrease, in case said congestion status parameter indicates the presence of a congestion; or
ii. the transmission rate increase, in case said congestion status parameter indicates that the congestion is over.

In the invention, conveniently, said step of identifying the congestion status level over a congested branch may be performed via algorithms based on the criteria selected from the group consisting of:
- signal-to-interference ratio;
- relative packet delay;
- a combination of signal-to-interference ratio and relative packet delay.

In the invention, conveniently, more than one branch may be congested and wherein the serving radio network controller may send said congestion status parameter first to the branch which is more congested according to the congestion status level.

The invention may preferably comprise:
- including said mode parameter field within the set up messages of said radio links .

The invention may preferably comprise:
- including said mode parameter field within said congestion indication message.

In the invention, conveniently, said mode parameter field may indicate to the congested non-serving base station to perform one of the criteria selected from the group consisting of:
- reducing the transmission rate on said congested branch without reducing the transmission rate on the associated radio link by dropping internal frame protocol PDUs;
- reducing the transmission rate on said congested branch without reducing the transmission rate on the radio link by controlling that the filling level of the internal buffer is within a predefined threshold and, if said filling level exceeds said predefined threshold, discarding frame protocol PDUs over the congested branch.

In the invention, conveniently, said mode parameter field may indicate to the congested serving base station to perform one of the criteria selected from the group consisting of:
- reducing the transmission rate on said congested branch by reducing the transmission rate on the associated radio link ;
- reducing the transmission rate on said congested branch without reducing the transmission rate on the radio link by controlling that the filling level of the internal buffer is within a predefined threshold and, if said filling level exceeds said predefined threshold, reducing the transmission rate on said associated radio link.

In the invention, conveniently, said mode parameter field may be a field included within:
- said congestion indication message defined according to the 3GPP standard; or
- within a control message from said serving radio network controller to said base station via NBAP radio link setup defined according to the 3GPP standard.

In the invention, conveniently, said regulating parameter field may be a field included within said congestion indication message defined according to the 3GPP standard.

The idea of the invention lies in providing, by means of the SRNC, to the concerned Nodes B the optimized parameters on the mode and/or on the regulating speed variation to be used in case of congestion/decongestion, given the fact that the SRNC, differently than the Node B, has the availability of information regarding the status of the other Nodes B of the macro diversity system.

The proposed invention exploits the centralized information about the overall resources which is available at the SRNC for improving TNL congestion control in case of macro diversity.

The proposed invention allows macro diversity gain loss to be minimized.

In fact the proposed invention introduces the possibility for the SRNC to define the amount of rate reduction/increase that Node B should apply in case of congestion/decongestion.

Advantageously, since SRNC is also the network entity that detects branch congestion/decongestion, the possibility for the SRNC to also control Iub rate reduction/increase in case of E-DCH congestion/decongestion provides more flexibility for the whole system and a better TNL resource utilization as the SRNC is the concentrating point to which the UL data traffic of a number of Nodes B is sent.

The invention will now be described in preferred but not exclusive embodiments with reference to the accompanying drawings, wherein:
- Figure 1: a block diagram of an example cellular system with macro diversity;
- Figure 2: a structure of a TNL congestion indication control frame according to an example embodiment of the present invention;
- Figure 3: a structure of a TNL congestion indication control frame according to a another example embodiment of the present invention;

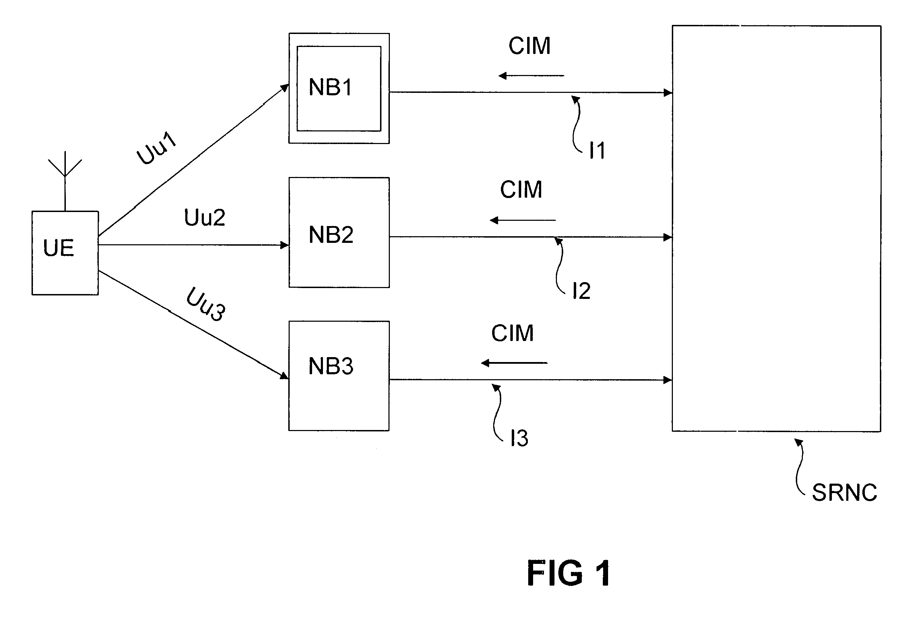

Figure 1 shows a cellular system in a macro diversity state, in which a mobile station UE has three radio links Uu1, Uu2, Uu3 with three respective base stations or Nodes B NB1, NB2, NB3.

The three Nodes B NB1, NB2, NB3 comprise one serving Node B NB1 and two non-serving Nodes B NB2, NB3.

The three Nodes B are connected via their respective branches I1, I2, I3 to the serving radio network controller SRNC.

The branches I1, I2, I3, arriving at the serving radio network controller SRNC, may be either Iub or Iur links, depending if the serving radio network controller SRNC is connected directly to the Nodes B NB1, NB2, NB3 or if it is connected via drift RNCs.

A serving branch I1 is the Iub/Iur link that connects the EDCH serving radio link set with the serving radio controller SRNC. The EDCH serving radio link set are the EDCH radio links of the serving Node B NB1 having the serving EDCH cell. A non-serving branch I2, I3 is an Iub/Iur link that connects the radio link set of a non-serving Node B NB2, NB3 not containing the serving cell with the serving radio controller SRNC.

The skilled in the art easily understands that the number of non serving branches in a macro diversity case may be different than two.

The serving radio network controller SRNC may detect, at the frame protocol level, congestion in one or more of the Nodes B NB1, NB2, NB3.

When congestion occurs on one of the specific Iub or Iur links I1, I2, I3, the serving radio network controller SRNC sends a TNL Congestion Indication message CIM in downlink to the concerned Node B NB1, NB2, NB3.

In a first mode according to the present invention, in case the congested branch is a serving branch 11, upon reception of the congestion indication message CIM, the congested Node B NB1 may decrease the data rate of the congested branch 11 by reducing the rate of the associated radio link Uu1 via downgrading the scheduling grants for its cell.
In 3GPP standard, a serving Node B NB1 decreases the uplink transmission rate on radio link Uu1 by reducing the absolute grant (AG) for the concerned mobile station UE.

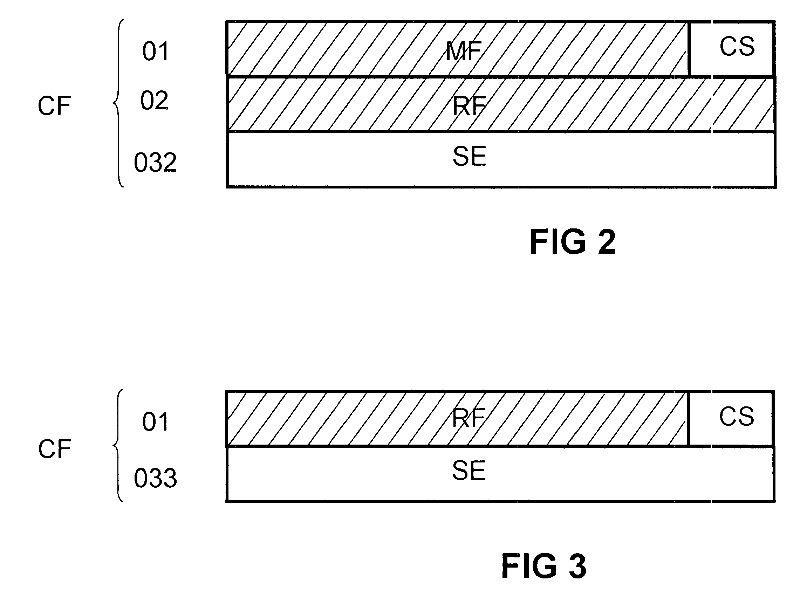

In a second mode according to the present invention, in case serving Node B NB1 has enough buffer configured for the specified E-DCH MAC-d flow and in case it has received a specific permission from the serving radio network controller SRNC via a mode parameter field MF (see Figure 2), then Node B may first try to decrease the rate over Iub interface without reducing the Uu rate of the radio link Uu1.

Tn such an internal buffer data coming from the air interface are stored before they are sent to the serving radio network controller SRNC. The internal buffer should be large enough to compensate the different data rate of air interface and of the Iub interface in case of congestion for a certain time.

Advantageously, through this second approach, the end to end user throughput may be maximized.

In fact, in the congested serving node NB1, the serving bearer data rate may be reduced, without reducing the bit rate on the radio link Uu1, by accepting some predefined delays and by having an internal buffer of a certain size in Node B NB1.

Only in case the packet delays in Node B NB1 are greater than a predefined threshold, then the decreasing of the user equipment UE data rate is obtained by setting scheduling grants to produce grant reduction over the Uu interface of radio link Uu1.

In case the congested branch is a non-serving branch I2, I3, upon reception of the congestion indication message CIM by the congested Node B NB2, the data rate of the congested branch I2 may be decreased, without reducing the rate of the associated radio link Uu2.

In a third mode according to the present invention upon receiving the congestion indication message CIM, the congested non-serving Node B NB2 may perform an internal frame protocol PDU drop for the non-serving transport bearers.

Thus in order to decongest the congested EDCH MAC-es flow, the concerned non-serving Node B NB2 may discard a percentage of the reassembled EDCH frame protocol packets, an integer number of the EDCH frame protocol PDUs.

By dropping a percentage x% of packets in Node B NB2, the remaining percentage (100-x)% of packets may advantageously be used for macro diversity selection in the serving radio network controller SRNC in order to keep the macro diversity gain as high as possible.

In a forth mode according to the present invention, upon receiving the congestion indication message CIM, the congested non-serving Node B NB2, which comprises an internal buffer, decreases the data rate of non-serving EDCH transport bearers over Iub/Iur interface IU2 and at, the same time, supervises the filling level of the internal buffer, or equivalently, supervises the introduced estimated additional delay, thus ensuring that the transport bearer rate is decreasing with some tolerable pre-defined delay.

If the filling level of the internal buffer or the introduced estimated delay exceeds predefined thresholds, then a certain amount of EDCH FP PDUs is discarded by the congested non-serving Node B NB2.

In one solution of the present invention, as shown in Figure 2, a mode field MF may be included within the TNL Congestion Indication control frame CF of the 3GPP standard and it may indicate to the concerned serving or non serving Node B NB1, NB2, NB3 which TNL decongestion criteria are to be adopted.

For example, this mode field MF may be similar to the New IE field in the HS-DSCH FP of the 3GPP standard.

This mode field MF may be, for example, defined as the first two bits of the Spare Extension of the TNL Congestion Indication control frame CF, following the two bits of Congestion Status CS. The remaining bits within the same first byte O1 may be left for further use.

One of the two bits may specify if one of the four modes according to the present invention may be applied.

For example, if such bit is set to zero, it may mean that no information about one of the four modes according to the present invention is available for the modes to be applied for the decongestion of congested branches.

Therefore, in this situation, the congested Node B NB1, NB2, NB3 may reduce the Iub throughput, and in case it is a serving Node B NB1, then also the user equipment scheduling grants are reduced in congested conditions.
This is what a Node B typically performs in accordance with Release 6 of EDCH 3GPP, where it is up to the Node B NB1, NB2, NB3 to autonomously decide the amount of rate reduction and the increase of rate after the TNL Congestion Indication message CIM has indicated that the congestion has been removed from the Iub link.

Thus, if information on the modes of the present invention is not supported in a cellular telecommunication system, then the above option may be used in order to render a system compliant with Release 6 of EDCH 3GPP.

Instead, if such bit is set to one, it may mean that information on one of the four modes according to the present invention is available for congestion control.

Then, the other bit of the two bits of the mode field MF may specify which one of the four modes according to the present invention is to be performed.

For example, such other bit may indicate if the second or forth mode of the present invention which requires an internal buffer in Node B NB1, NB2, NB3 may be adopted.

More specifically, as previously explained, the second mode is to be adopted if the Node B is a serving base station NB1 while the fourth mode is to be adopted if the Node B is a non-serving base station NB2, NB3.

If Node B NB1, NB2, NB3 has no internal buffer, the first or the third mode of the present invention may be applied.

More specifically, as previously explained, the first mode is to be adopted if the Node B is a serving base station NB1 while the third mode is to be adopted if the Node B is a non-serving base station NB2, NB3.

In a further embodiment of the present invention, information of the mode parameter field MF may be exchanged via control message from RNC to Node B via NBAP RL setup. NBAP is a protocol used in 3GPP standard to specify the UTRAN signalling interface between the RNC and the Node B.

In this latter embodiment, the TNL Congestion Indication frame CF may not include such MF field.

In a second solution according to the present invention, as shown in Figures 2 and 3, a new parameter may be introduced in the TNL Congestion Indication control frame CF, the TNL Congestion Indication message CIM sent to the concerned Node B NB1, NB2, NB3, to define the rate regulating parameter RF, rate decrease/rate increase, of the uplink EDCH FP rate over the congested/decongested branch I1, I2, I3.

The allowed sizes for the TNL Congestion Indication control frame CF are defined in the 3GPP Standard.

Such regulating factor RF may, for example, represent, in case of congestion, the percentage of EDCH FP packets to be dropped for the third mode of the present invention or the percentage of the EDCH Iub/Iur rate to be decreased for the second or fourth mode of the present invention.

In case the regulating factor RF represents the percentage of packets to be dropped in a non serving base station NB2, NB3, it may be expressed as a percentage x% of total packets of an integer number of frame protocol PDUs.

In case of no congestion, when the congestion status field CS in the TNL Congestion Indication control frame CF is indicating no congestion, the regulating factor RF factor may represent the rate increase to be performed during the recovery phase.

In case such information on the rate regulation parameter RF is not available, the congested Node B NB2 may autonomously define the reducing/increasing rate speed to be adopted.

The regulating parameter field RF may be constituted by some unused bits of the Spare Extension SE of the TNL Congestion Indication control frame CF.

As shown in Figure 3, the regulating parameter RF may be included in the first byte O1 of the TNL Congestion Indication control frame CF, thus leaving 33 bytes 033 free for a spare extension SE.

For example, the value range of the regulating factor RF may be between zero and one hundred percent. The granularity of the regulating factor RF may be 2% and the field length may be 6 bits.

Alternatively, as shown in Figure 2, the regulating factor parameter RF may be included in the second byte O1 of the TNL Congestion Indication control frame CF, thus leaving 32 bytes 032 free for the spare extension SE.

In a further example, the value range of the regulating field RF may be between zero and one hundred percent. The granularity of the reducing factor RF may be 0.4% and the field length may be 8 bits.

The skilled in the art easily understand that other ways of coding the regulating factor parameter RF may be used without departing from the scope of the invention.

In a further embodiment of the present invention, the serving radio network controller SRNC detects congestion in a branch I1, I2, I3 and may send the Congestion Indication message CIM to the concerned base station NB1, NB2, NB3 according to algorithms based on the signal-to-interference ratio (SIR).

In a further embodiment of the present invention, the serving radio network controller SRNC detects congestion in a branch I1, I2, I3 and sends the congestion indication message CIM to the concerned base station NB1, NB2, NB3 according to algorithms based on relative packet delay.

The relative packet delay of MAC-d flow with the same ID is measured by the macro diversity selection functionality of the serving radio network controller SRNC. The serving radio network controller SRNC sends the Congestion Indication message CIM to the concerned congested Nodes B NB1, NB2, NB3 having branches I2, I3 with packets with relative delay greater then a predefined one.

In a further embodiment of the present invention, a combination of the above algorithms based on SIR and packet delay may be used to define a level of congestion above which a Congestion Indication message CIM is sent to the concerned branch.

In a further embodiment of the present invention, in case more than one branches I1, I2, I3 are congested, the serving radio network controller SRNC may send the Congestion Indication message CIM first to the branches I1, I2, I3 with the minimum SIR and/or with the greater packet delay.

In case congestion persists, the serving radio network controller SRNC may send the congestion indication message CIM for the congested branch I1, I2, I3 with the next minimum SIR and/or with the next higher packet delay.

In this way, the macro diversity gain is advantageously maximized.

In case of congestion, the regulating field RF is to be intended as a decrease coefficient, e.g. 0.5 which may mean:
- in case the first mode of the present invention is implemented, that 50% of the radio link Uu1 rate has to be dropped;
- in case the second or the fourth mode of the present invention is implemented, that the Iub interface data rate has to be decreased of 50%;
- in case the third mode of the present invention is implemented, that 50% of the packets have to be dropped.

Instead, in case of no congestion, during the recovery phase, the regulating field RF is intended as an additive increase of the maximum allowed rate for the Node B.

Thus, the Node B increases the rate gradually by a step defined by the regulating factor RF.

For example, in a non congestion case, the regulating factor parameter RF may be intended as an increase coefficient, e.g. 0.1 which may mean:
- in case the first mode according to the present invention is to be applied, that an additive increase of 10% of the radio link Uu1 rate has to be performed;
- in case the third mode according the present invention is implemented, that an additive increase of 10% of the number of sent packets or bytes is to be performed;
- in case the forth mode according to the present invention is implemented, an additive increase of 10% of the sent data rate is to be performed.

In a further example, an increase of 0.1 may mean an additive increase of 0.1 step per a pre-defined time interval.

The rate increase step may be defined as the increment of the number of E-DCH packets sent by Node B in a defined time interval (time step).

In a further embodiment of the present invention, the time interval (time step) could be pre-configured via NBAB when the link between Node B and RNC is set up.

In a further embodiment of the present invention, in order to keep the congestion indication message CIM as small as possible, agreed rules similar to the AIMD concept may be used.

### List of reference signs

- CIM: congestion indication message
- CS: congestion status bits
- I1,..,I3: branch, Iub/Iur link
- NB1,..,NB3: base station, Node B,
- UE: user equipment, mobile station
- Uu1,..,Uu3: radio links
- MF: mode parameter field
- RF: regulating parameter field, rate regulating parameter, regulating factor, regulating parameter
- O1: one octet, one byte
- 032,033: 32 octets, 32 bytes
- CF: congestion indication control frame
- SE: spare extension
- UE: mobile station, user equipment

### List of acronyms

- 3GPP: 3rd Generation Partnership Project
- AG: absolute grant
- AIMD: additive multiplicative increase decrease
- EDCH: enhanced dedicated channel
- FP: frame protocol
- HS-DSCH: high speed downlink share channel
- ID: identifier
- Iub: interface between an RNC and a Node B
- Iur: logical interface between two RNCs
- MAC-d: medium access control dedicated
- MAC-es: medium access control for E-DCH in UE and RNC
- MDS: macro diversity selection
- NBAP: Node B application part
- PDU: protocol data unit
- RLS: radio link set
- RNC: radio network controller
- SIR: signal-to-interference ratio
- SRNC: serving radio network controller
- TNL: transport network layer
- UE: user equipment
- UTRAN: universal terrestrial radio access network
- Uu: radio interface between UTRAN and the UE

## Claims

1. A method for congestion control with macro diversity in a telecommunication cellular system, in which a mobile station (UE) has at least two radio links (Uu1, Uu2, Uu3) connecting to at least two respective base stations (NB1, NB2, NB3);
said at least two base stations (NB1, NB2, NB3) being connected to a serving radio network controller (SRNC) via at least two respective branches (I1, I2, I3); and
said at least two base stations (NB1, NB2, NB3) comprising one serving base station (NB1) and at least one non-serving base station (NB2, NB3);
said method comprising the steps of:
- by said serving radio network controller (SRNC), identifying the congestion status level over a congested branch (I1, I2, I3);
- by said serving radio network controller (SRNC), sending a congestion indication message (CIM), including a congestion status parameter (CS), to the congested base station (NB1, NB2, NB3) associated with said congested branch (I1, I2, I3);
said method **characterized in that** it further comprises the step of:
a) by said serving radio network controller (SRNC), controlling the variation of the transmission rate over said congested branch (I1, I2, I3) by including a regulating parameter field (RF) within said congestion indication message (CIM).

2. The method according to claim 1,
said method further comprising the step of:
b) by said serving radio network controller (SRNC), defining the mode for the variation of the transmission rate over a congested branch (I1, I2, I3) by sending a mode parameter field (MF) to at least one of said base stations (NB1, NB2, NB3).

3. A method for congestion control with macro diversity in a telecommunication cellular system, in which a mobile station (UE) has at least two radio links (Uu1, Uu2, Uu3) connecting to at least two respective base stations (NB1, NB2, NB3);
said at least two base stations (NB1, NB2, NB3) being connected to a serving radio network controller (SRNC) via at least two respective branches (I1, I2, I3); and
said at least two base stations (NB1, NB2, NB3) comprising one serving base station (NB1) and at least one non-serving base station (NB2, NB3);
said method comprising the steps of:
- by said serving radio network controller (SRNC), identifying the congestion status level over a congested branch (I1, I2, I3);
- by said serving radio network controller (SRNC), sending a congestion indication message (CIM), including a congestion status parameter (CS), to the congested base station (NB1, NB2, NB3) associated with said congested branch (I1, I2, I3);
said method **characterized in that** it further comprises the step of:
b) by said serving radio network controller (SRNC), defining the mode for the variation of the transmission rate over a congested branch (I1, I2, I3) by sending a mode parameter field (MF) to at least one of said base stations (NB1, NB2, NB3).

4. The method according to claim 3,
said method further comprising the step of:
a) by said serving radio network controller (SRNC), controlling the variation of the transmission rate over said congested branch (I1, I2, I3) by including a regulating parameter field (RF) within said congestion indication message (CIM).

5. The method according to any of the preceding claims, said method further comprising:
- an internal buffer within said congested base station (NB1, NB2, NB3);
- if said congested base station (NB1, NB2, NB3) is a serving base station (NB1), reducing the transmission rate on said congested branch (I1) without reducing the transmission rate on the associated radio link (Uu1);
- by said congested base station (NB1), controlling that the filling level of said internal buffer is within a predefined threshold; if said filling level exceeds said predefined threshold, reducing the transmission rate on said associated radio link (Uul).

6. The method according to any of the preceding claims, said method further comprising the step of:
- if said congested base station (NB1, NB2, NB3) is a non serving base station (NB2, NB3), reducing the transmission rate on said congested branch (I2, I3) without reducing the transmission rate on the associated radio link (Uu2, Uu3) by dropping internal frame protocol PDUs by said congested non-serving base station (NB2, NB3).

7. The method according to any of the preceding claims, said method further comprising:
- an internal buffer within said congested base station (NB1, NB2, NB3);
- if said congested base station (NB1, NB2, NB3) is a non serving base station (NB2, NB3), reducing the transmission rate on said congested branch (I2, I3) without reducing the transmission rate on the associated radio link (Uu2, Uu3) by controlling that the filling level of said internal buffer is within a predefined threshold;
- if said filling level exceeds said predefined threshold, dropping frame protocol PDUs by said congested non-serving base station (NB2, NB3) .

8. The method according to any of claims 1, 4 to 7, wherein said regulating parameter field (RF) included in said congestion indication message (CIM) indicates to the congested base station (NB1, NB2, NB3) the rate variation to be performed on said congested branch (I1, I2, I3); wherein said percentage of variation indicates:
ii. the transmission rate decrease, in case said congestion status parameter (CS) indicates the presence of a congestion; or
iv. the transmission rate increase, in case said congestion status parameter (CS) indicates that the congestion is over.

9. The method according to any of the preceding claims, wherein said step of identifying the congestion status level over a congested branch (I1, I2, I3) is performed via algorithms based on the criteria selected from the group consisting of:
- signal-to-interference ratio;
- relative packet delay;
- a combination of signal-to-interference ratio and relative packet delay.

10. The method according to any of the preceding claims, wherein more than one branch (I1, I2, I3) are congested and wherein the serving radio network controller (SRNC) sends said congestion status parameter (CS) first to the branch (I1, I2, I3) which is more congested according to the congestion status level.

11. The method according to any of the claims 2 to 10,
said method further comprising the step of:
- including said mode parameter field (MF) within the set up messages of said radio links (Uu1, Uu2, Uu3).

12. The method according to any of the claims 2 to 10,
said method further comprising the steps of:
- including said mode parameter field (MF) within said congestion indication message (CIM).

13. The method according to any of the claims 2 to 12, wherein said mode parameter field (MF) indicates to the congested non-serving base station (NB2, NB3) to perform one of the criteria selected from the group consisting of:
- reducing the transmission rate on said congested branch (I2, I3) without reducing the transmission rate on the associated radio link (Uu2, Uu3) by dropping internal frame protocol PDUs;
- reducing the transmission rate on said congested branch (I2, I3) without reducing the transmission rate on the radio link (Uu2, Uu3) by controlling that the filling level of the internal buffer is within a predefined threshold and, if said filling level exceeds said predefined threshold, discarding frame protocol PDUs over the congested branch (I2, I3).

14. The method according to any of the claims 2 to 12, wherein said mode parameter field (MF) indicates to the congested serving base station (NB1) to perform one of the criteria selected from the group consisting of:
- reducing the transmission rate on said congested branch (I1) by reducing the transmission rate on the associated radio link (Uu1);
- reducing the transmission rate on said congested branch (I1) without reducing the transmission rate on the radio link (Uu1) by controlling that the filling level of the internal buffer is within a predefined threshold and, if said filling level exceeds said predefined threshold, reducing the transmission rate on said associated radio link (Uul).

15. The method according to any of the claims 2 to 14, wherein said mode parameter field (MF) is a field included within:
- said congestion indication message (CIM) defined according to the 3GPP standard; or
- within a control message from said serving radio network controller (SRNC) to said base station (NB1, NB2, NB3) via NBAP radio link setup defined according to the 3GPP standard.

16. The method according to any of the claims 1, 4 to 15, wherein said regulating parameter field (RF) is a field included within said congestion indication message (CIM) defined according to the 3GPP standard.
